# EUROPEAN PATENT APPLICATION

(11) **EP 4 848 055 A1**
(43) Date of publication of application: **02.12.2026**
(21) Application number: 25744630.2
(22) Date of filing: 22.01.2025
(51) Int. Cl.: G06F 3/04842, G06F 9/451

(54) **INTERACTION METHOD AND APPARATUS, AND DEVICE AND STORAGE MEDIUM**

(30) Priority: 22.01.2024 CN 202410089284
(71) Applicant: Beijing Zitiao Network Technology Co., Ltd., Beijing 100190 (CN)
(72) Inventor: WU, Xuekai, Beijing 100028 (CN); TANG, Liwei, Beijing 100028 (CN); WU, Xuheng, Beijing 100028 (CN); WANG, Yehong, Beijing 100028 (CN); SHEN, Xiaoyu, Beijing 100028 (CN); LI, Qiuting, Beijing 100028 (CN); LIU, Huilin, Beijing 100028 (CN); MA, Bo, Beijing 100028 (CN); WANG, Meiyi, Beijing 100028 (CN)
(74) Representative: Marks & Clerk LLP
(86) International application number: PCT/CN2025/074059
(87) International publication number: WO 2025/157192

(57) **Abstract**

Embodiments of the present disclosure relate to an interaction method, an apparatus, a device, and a storage medium. The method proposed herein includes: an interaction solution provided by the embodiments of the present disclosure. According to various embodiments of the present disclosure, a first style of a target effect may be applied to image content associated with a target user based on a selection of the target effect by the target user; and the target effect may be switched from the first style to a second style, in response to interaction information associated with the target user satisfying a predetermined condition associated with the target effect. The embodiments of the present disclosure can achieve switching the style of the target effect based on the interaction information associated with the target user, which leads to higher interaction flexibility and effectively improves the user's interaction experience.

## Description

This application claims priority to Chinese Patent Application No. 202410089284.X, filed on January 22, 2024, and entitled "INTERACTION METHOD, APPARATUS, DEVICE, AND STORAGE MEDIUM", which is hereby incorporated by reference in its entirety.

### FIELD

Example embodiments of the present disclosure generally relate to the field of computers, and in particular, to an interaction method, an apparatus, a device, and a computer-readable storage medium.

### BACKGROUND

With the development of computer technologies, the Internet has become an important platform for people to exchange information. In the process of information exchange over the Internet, effects of various styles have become an important medium for social expression and information exchange of the people. However, conventional effects are applied in a relatively monotonous manner with low flexibility.

### SUMMARY

In a first aspect of the present disclosure, a method of interaction is provided. The method includes: applying a first style of a target effect to image content associated with a target user based on a selection of the target effect by the target user; and switching the target effect from the first style to a second style, in response to interaction information associated with the target user satisfying a predetermined condition associated with the target effect.

In a second aspect of the present disclosure, an apparatus for interaction is provided. The apparatus includes: an applying module configured to apply a first style of a target effect to image content associated with a target user based on a selection of the target effect by the target user; and a switching module configured to switch the target effect from the first style to a second style, in response to interaction information associated with the target user satisfying a predetermined condition associated with the target effect.

In a third aspect of the present disclosure, an electronic device is provided. The device includes at least one processor; and at least one memory coupled to the at least one processor and storing instructions for execution by the at least one processor, the instructions, when executed by the at least one processor, causing the device to perform the method of the first aspect.

In a fourth aspect of the present disclosure, a computer-readable storage medium is provided. The computer-readable storage medium has computer-executable program stored thereon, the computer-executable program being executable by a processor to implement the method of the first aspect.

In a fifth aspect of the present disclosure, a computer program product is provided. The computer program product includes computer-executable instructions that, when executed by a processor, implement the method according to the first aspect of the present disclosure.

It would be appreciated that the content described in this Summary section is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The foregoing and other features, advantages, and aspects of the embodiments of the present disclosure will become more apparent with reference to the following detailed description and in conjunction with the drawings. In the drawings, the same or similar reference symbols denote the same or similar elements.
FIG. 1 is a schematic diagram of an example environment in which the embodiments according to the present disclosure may be implemented;
FIG. 2 illustrates a flowchart of an example process of interaction according to some embodiments of the present disclosure;
FIG. 3A and FIG. 3B illustrate example interfaces according to some embodiments of the present disclosure;
FIG. 4 illustrates an example interface according to some embodiments of the present disclosure;
FIG. 5 illustrates a schematic structural block diagram of an example apparatus for interaction according to some embodiments of the present disclosure; and
FIG. 6 illustrates a block diagram of an electronic device capable of implementing a plurality of embodiments of the present disclosure.

### DETAILED DESCRIPTION

The embodiments of the present disclosure are described in more detail below with reference to the drawings. Although some embodiments of the present disclosure are shown in the drawings, it would be appreciated that the present disclosure may be implemented in various manners and should not be construed as being limited to the embodiments set forth herein. Instead, these embodiments are provided for a more thorough and complete understanding of the present disclosure. It would be appreciated that the drawings and embodiments of the present disclosure are only for illustrative purposes and are not intended to limit the protection scope of the present disclosure.

It should be noted that the titles of any sections/subsections provided herein are not restrictive. Various embodiments are described throughout this specification, and any type of embodiments may be included under any section/subsection. Furthermore, the embodiments described in any section/subsection may be combined with any other embodiments described in the same section/subsection and/or different sections/subsections in any manner.

In the description of the embodiments of the present disclosure, the term "comprise" and similar terms should be understood as open-ended inclusions, that is, "comprise but not limited to". The term "based on" should be understood as "at least partially based on". The term "one embodiment" or "the embodiment" should be understood as "at least one embodiment". The term "some embodiments" should be understood as "at least some embodiments". Other definitions, either explicit or implicit, may be included below. The terms "first", "second", and the like may refer to different or same objects. Other definitions, either explicit or implicit, may also be included below.

The embodiments of the present disclosure may involve data of a user, acquisition and/or use of data. All these aspects comply with corresponding laws, regulations, and related provisions. In the embodiments of the present disclosure, all collection, acquisition, processing, machining, forwarding, and use of data are performed on the premise that the user is aware of and confirms the same. Accordingly, when implementing the embodiments of the present disclosure, the user should be informed of the type, range of use, use scenarios, etc., of data or information that may be involved, and the authorization of the user should be obtained, in an appropriate manner in accordance with related laws and regulations. The specific manner of informing and/or authorizing may vary according to actual situations and application scenarios, and the scope of the present disclosure is not limited in this regard.

If the solutions in this specification and the embodiments involve personal information processing, the processing is performed on the premise that there is a legal basis (for example, the consent of the personal information subject is obtained, or it is necessary for the performance of a contract, etc.), and the processing is performed only within a specified or agreed scope. If the user refuses to process personal information other than the necessary information required for the basic functions, the user's use of the basic functions will not be affected.

In scenarios such as live streaming, effects have become a common way for different users to interact in a live streaming room. For example, a live streamer applies effects to a live streaming image to improve the interestingness of interaction in the live streaming room.

The embodiments of the present disclosure provide an interaction solution. According to various embodiments of the present disclosure, a first style of a target effect may be applied to image content associated with a target user based on a selection of the target effect by the target user; and the target effect may be switched from the first style to a second style, in response to interaction information associated with the target user satisfying a predetermined condition associated with the target effect.

In this way, the embodiments of the present disclosure can achieve switching the style of the target effect based on the interaction information associated with the target user, which leads to higher interaction flexibility and effectively improves the user's interaction experience.

Various example implementations of this solution are described in detail below with further reference to the drawings.

### Example Environment

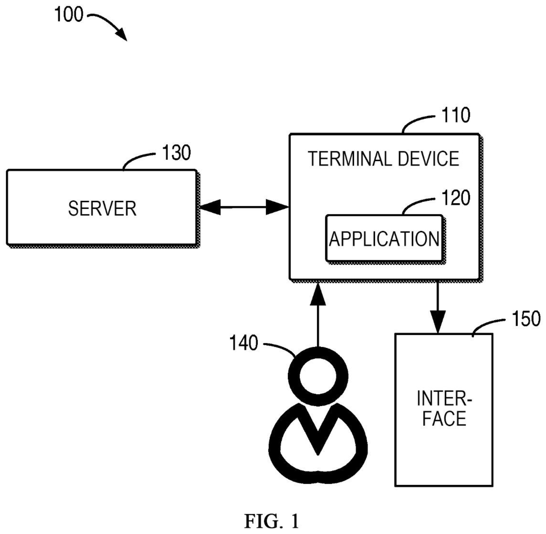

FIG. 1 illustrates a schematic diagram of an example environment 100 in which the embodiments of the present disclosure may be implemented. As shown in FIG. 1, the example environment 100 may include an electronic device 110.

In the example environment 100, the electronic device 110 may run an application 120 supporting interface interaction. The application 120 may be any appropriate type of application for interface interaction, examples of which may include but are not limited to a video application, a social application, or other appropriate applications. A target user 140 may interact with the application 120 via the electronic device 110 and/or its attached device.

In the environment 100 shown in FIG. 1, if the application 120 is in an active state, the electronic device 110 may present, through the application 120, an interface 150 for supporting the interface interaction.

In some embodiments, the electronic device 110 communicates with a server 130 to implement the provision of the services of the application 120. The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the foregoing, including accessories and peripherals of these devices or any combination thereof. In some embodiments, the electronic device 110 may also support any type of interface for the target user (such as "wearable" circuit, etc.).

The server 130 may be an independent physical server, a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. For example, the server 130 may include a computing system/server, such as a mainframe, an edge computing node, a computing device in a cloud environment, and the like. The server 130 may provide background services for the application 120 supporting interface interaction in the electronic device 110.

A communication connection may be established between the server 130 and the electronic device 110. The communication connection may be established in a wired or wireless manner. The communication connection may include, but is not limited to, a Bluetooth connection, a mobile network connection, a universal serial bus (USB) connection, a wireless fidelity (WiFi) connection, etc., and the embodiments of the present disclosure are not limited in this regard. In the embodiments of the present disclosure, the server 130 and the electronic device 110 may implement signaling interaction through the communication connection therebetween.

It would be appreciated that the structure and functions of the elements in the environment 100 are described for exemplary purposes only, without suggesting any limitation to the scope of the present disclosure.

Some example embodiments of the present disclosure are described below with continued reference to the drawings.

### Example Process

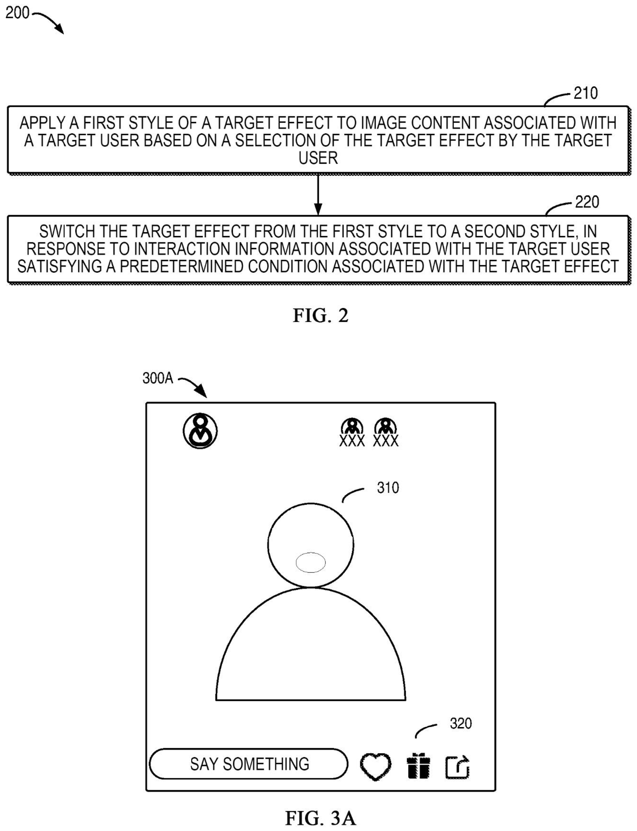

FIG. 2 illustrates a flowchart of an example interaction process 200 according to some embodiments of the present disclosure. The process 200 may be implemented at the electronic device 110. The process 200 is described below with reference to FIG. 1.

As shown in FIG. 2, at block 210, the electronic device 110 applies a first style of a target effect to image content associated with a target user 140 based on a selection of the target effect by the target user 140.

In some embodiments, the target effect is a visual effect used for decorating the image content.

As an example, the target effect may be applied to a target object included in the image content, that is, the target effect may decorate the target object included in the image content. The target object may be a person, an animal, etc. For example, the target effect may be a makeup effect, an accessory wearing effect, etc.

As another example, the target effect may also be applied to the entire image content to decorate the corresponding atmosphere or environment of the entire image content. For example, the target effect may be a snowing effect, which creates a snowing atmosphere for the entire image content.

In some embodiments, the target effect may include a visual element or a plurality of visual elements superimposed on the image content. The existence form and the existence position of the visual element in the image content may be set according to requirements. For example, the existence form may be a rabbit ear hairpin, and the existence position may be the position of the head of the user in the image content.

In some embodiments, the target effect may correspond to a plurality of styles, which may be reflected in color differences, size differences, shape differences, etc. For example, the style corresponding to the target effect of "rabbit ear hairpin" may be a "pink rabbit ear hairpin", a "white rabbit ear hairpin", etc.

In some embodiments, a user may publish corresponding work based on the application 120, and the work may be an image, or a video, or an audio, or the like. The user may also create a corresponding live streaming room based on the application 120 and broadcast live content in the live streaming room, and the live content may be interesting story sharing, singing, etc. The user may also shoot content in real time based on the application 120, and the real-time shot content may be a real-time shotted image, a real-time shotted video, etc.

In some embodiments, the image content associated with the target user 140 may be associated with a work published by the target user 140. That is, the target effect is applied to the work.

In some other embodiments, the image content may also be associated with live streaming content of a live streaming room associated with the target user 140. That is, the target effect may be applied to a live streaming image.

In some other embodiments, the image content may also be associated with real-time shotted content of the target user 140. That is, the target effect may be used for the content shotted by the user in real time. For example, in the process of the user shooting a work, the user may view the effect of the target effect in real time.

In order to enhance the user's immersive experience, in some embodiments, the target user 140 may select the target effect.

The process of how the target user 140 selects the target effect is described below.

In some embodiments, the electronic device 110 may present a set of candidate effects in an effect panel. In order to facilitate the user to view and determine the using method of these effects, description information about each of the candidate effects may further be displayed on the effect panel. The description information indicates a style switch to be presented by each of the candidate effects when a specific condition is satisfied. The specific condition may be any appropriate condition, for example, the specific condition may be that the number of likes given to a published work exceeds a predetermined threshold. The electronic device 110 may receive the selection of a target effect from the set of candidate effects by the target user 140.

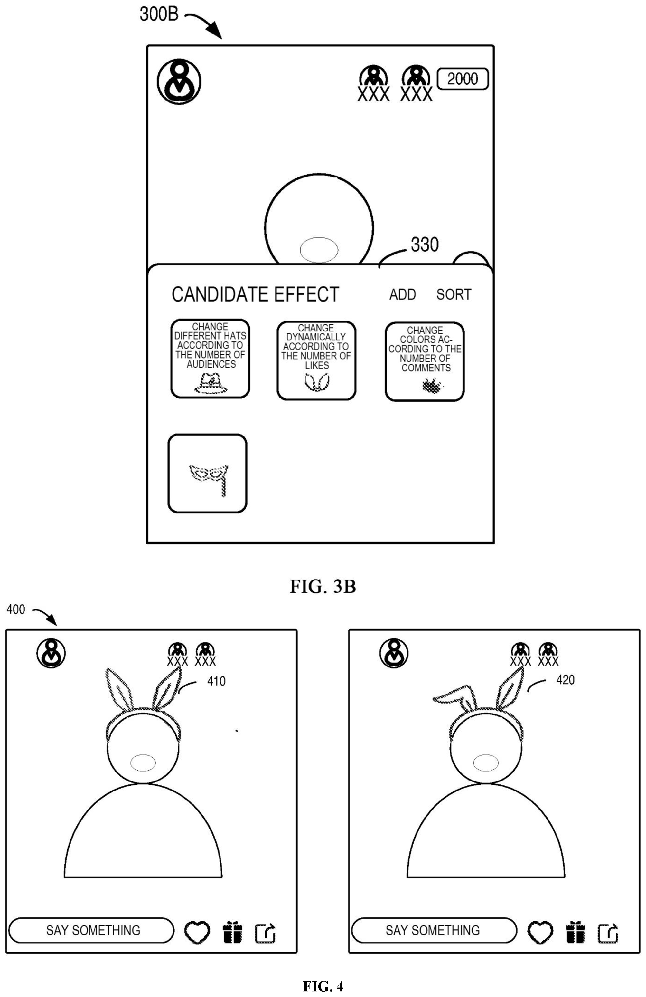

The specific process of interaction type selection is described below with reference to FIG. 3A and FIG. 3B. It would be appreciated that although FIG. 3A and FIG. 3B are described by using an example of live streaming broadcasting based on a live streaming room, this is only exemplary.

As shown in FIG. 3A, the electronic device 110, for example, may present an interface 300A, which may be used to present relevant information about live streaming content broadcasting. A user's face 310 may be displayed in the interface 300A, and an effect control 320 may further be displayed in the interface 300A. The user may click on the effect control 320, and the electronic device 110 may present an interface 300B. The interface 300B may display selection controls 330 corresponding to a set of candidate effects to support the user to select a target effect. The user may select the target effect by clicking on the control corresponding to the target effect. Certainly, the user may also select the target effect in other manners, for example, by inputting identification information corresponding to the target effect into an effect input box, which is be described in detail herein.

After receiving the selection of the target effect by the target user 140, the electronic device 110 may apply the first style of the target effect to the image content associated with the target user 140. For example, a white rabbit hairpin is worn on the image content of the live streaming of the target user 140, and specifically, the white rabbit hairpin is worn on the head of the user in the image content.

At block 220, the electronic device 110 switches the target effect from the first style to a second style, in response to interaction information associated with the target user 140 satisfying a predetermined condition associated with the target effect.

In some embodiments, if the image content includes the live streaming content of the live streaming room associated with the target user 140, the interaction information associated with the target user 140 may be determined based on at least one item of interaction data associated with the live streaming room. The interaction data may be the number of likes given to the live streaming room during the current live streaming, the number of comments made during the current live streaming, the virtual resources obtained by the target user 140 during the current live streaming, etc.

In some embodiments, if the image content is associated with the work published by the target user 140, the interaction information may be determined based on at least one item of interaction data associated with the work. The interaction data may be the number of likes given to the work, the number of comments made on the work, the number of times that the work has been shared, etc.

In some embodiments, if the image content is associated with the real-time shot content of the target user 140, the interaction information may be determined based on the interaction data associated with the target user 140.

In some embodiments, the interaction information associated with the target user 140 satisfying the predetermined condition associated with the target effect may include an interaction value associated with the interaction information reaching a first threshold. For example, when the absolute value of the interaction value reaches a specific threshold, the style of the target effect may be switched.

Exemplarily, the interaction value may be a data volume corresponding to at least one item of interaction data associated with the work, a data volume corresponding to at least one item of interaction data associated with the live streaming room, etc.

In some embodiments, the interaction information associated with the target user 140 satisfying the predetermined condition associated with the target effect may include that a change degree associated with the interaction information reaching a second threshold.

As an example, the change degree associated with the interaction information may be a degree of increase in the followers of the live streaming room, a degree of increase in the number of times that the work has been shared, etc.

It would be appreciated that the first threshold and the second threshold mentioned above may be set according to requirements.

In some embodiments, the electronic device 110 may switch the target effect from the first style to the second style when determining that the interaction information associated with the target user 140 satisfies the predetermined condition associated with the target effect. There may be at least one of differences such as a size difference, a shape difference, a color difference, and a content difference between the first style and the second style.

Taking the target effect including at least one visual element superimposed on the image content as an example, in some embodiments, the electronic device 110 may present a motion effect of the at least one visual element within a predetermined time period to switch the target effect from the first style to the second style. For example, as shown in FIG. 4, the effect of the white rabbit hairpin may be gradually changed from two rabbit ears 410 in an upright state to one rabbit ear 420 in an upright state and the other rabbit ear 420 in a bent state, etc. The motion effect corresponding to the rabbit ears, that is, the state transition process, will not be described in detail herein.

In some other embodiments, the electronic device 110 may change display content of the at least one visual element to switch the target effect from the first style to the second style. For example, the white rabbit hairpin is switched to a pink rabbit hairpin. Alternatively, the electronic device 110 may change text content corresponding to the visual element, for example, to indicate a change in the interaction data.

Taking the target effect including a plurality of visual elements superimposed on the image content as an example, in some embodiments, the electronic device 110 may adjust the visibility of at least one of the plurality of visual elements to switch the target effect from the first style to the second style. Exemplarily, adjusting the visibility of the visual element may include stopping displaying the corresponding visual element, adjusting the transparency of the visual element, adjusting the prominence of the visual element, etc.

As an example, the visual elements initially corresponding to the target effect may include two visual elements, namely, a white rabbit ear hairpin and a heart. In the case that the specific condition is satisfied, the electronic device 110 may stop displaying the visual element of the heart and only display the visual element of the white rabbit ear hairpin to switch the style.

In some embodiments, the plurality of visual elements may further have associated attributes. As an example, the plurality of visual elements may have the same style theme. As another example, the plurality of visual elements may also correspond to different elements that may match in function or style.

In some embodiments, the electronic device 110 sends first information indicating the predetermined condition to a remote device. The remote device may determine, based on the predetermined condition and each item of interaction information included in a target database, whether the interaction information satisfies the predetermined condition. If the remote device determines that the interaction information satisfies the predetermined condition, the remote device sends second information to the electronic device 110, where the second information is used to indicate the switch of the target effect.

In the present disclosure, the electronic device 110 may send the first information indicating the predetermined condition to the remote device, such as the server 130. When the server 130 determines that the interaction information satisfies the predetermined condition based on the interaction information in the target database and the received predetermined condition, the server 130 sends the second information to the electronic device 110 to indicate the electronic device 110 to implement the effect switch.

In this way, the embodiments of the present disclosure can achieve switching the style of the target effect based on the interaction information associated with the target user 140, which leads to higher interaction flexibility and effectively improves the user's interaction experience.

### Example Apparatus and Device

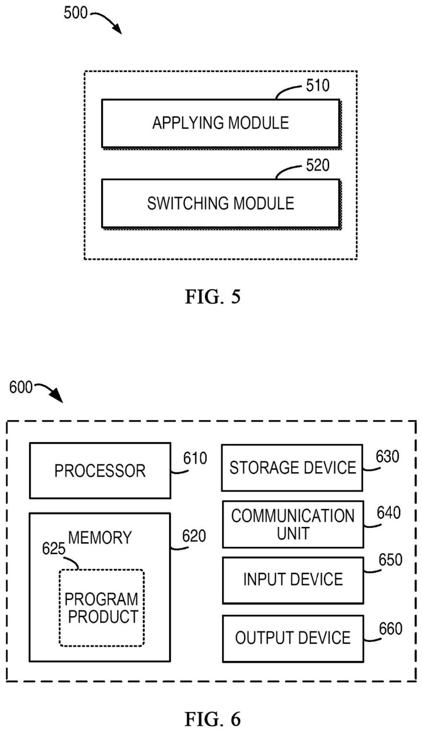

The embodiments of the present disclosure further provide corresponding apparatuses for implementing the above methods or processes. FIG. 5 illustrates a schematic structural block diagram of an example apparatus 500 for interaction according to some embodiments of the present disclosure. The apparatus 500 may be implemented as or included in the electronic device 110. Each module/component in the apparatus 500 may be implemented by hardware, software, firmware, or any combination thereof.

As shown in FIG. 5, the apparatus 500 includes an applying module 510 configured to apply a first style of a target effect to image content associated with a target user based on a selection of the target effect by the target user; and a switching module 520 configured to switch the target effect from the first style to a second style, in response to interaction information associated with the target user satisfying a predetermined condition associated with the target effect.

In some embodiments, the image content includes live streaming content of a live streaming room associated with the target user, and the interaction information is determined based on at least one item of interaction data associated with the live streaming room.

In some embodiments, the image content is associated with a work published by the target user, and the interaction information is determined based on at least one item of interaction data associated with the work.

In some embodiments, the image content is associated with real-time shot content of the target user, and the interaction information is determined based on an interaction operation of the target user.

In some embodiments, the target effect includes at least one visual element superimposed on the image content, and the switching module 520 is specifically configured to: present a motion effect of the at least one visual element within a predetermined time period; or change display content of the at least one visual element.

In some embodiments, the target effect includes a plurality of visual elements superimposed on the image content, and the switching module 520 is specifically configured to: adjust visibility of at least one of the plurality of visual elements.

In some embodiments, the target effect is applied to a target object included in the image content.

In some embodiments, the apparatus 500 further includes a sending module configured to send first information indicating the predetermined condition to a remote device; and a determining module configured to determine that the predetermined condition is satisfied based on second information from the remote device, the second information being generated by the remote device based on the interaction information.

In some embodiments, the predetermined condition includes at least one of the following: an interaction value associated with the interaction information reaching a first threshold; and a change degree associated with the interaction information reaching a second threshold.

In some embodiments, the apparatus 500 further includes a presenting module configured to present a set of candidate effects in an effect panel, the effect panel further displaying description information about a corresponding candidate effect, the description information indicating a style switch to be presented by the corresponding candidate effect when a specific condition is satisfied; and a receiving module configured to receive the selection of the target effect from the set of candidate effects by the target user.

FIG. 6 illustrates a block diagram of an electronic device 600 in which one or more embodiments of the present disclosure may be implemented. It would be appreciated that the electronic device 600 shown in FIG. 6 is only exemplary and should not constitute any limitation on the function and scope of the embodiments described herein. The electronic device 600 shown in FIG. 6 may be used to implement the electronic device 110 in FIG. 1.

As shown in FIG. 6, the electronic device 600 is in the form of a general electronic device. The components of the electronic device 600 may include, but are not limited to, one or more processing units or processors 610, a memory 620, a storage device 630, one or more communication units 640, one or more input devices 950, and one or more output devices 660. The processor 610 may be an actual or virtual processor and may perform various processes based on the programs stored in the memory 620. In a multi-processor system, a plurality of processors execute computer executable instructions in parallel to improve the parallel processing capability of the electronic device 600.

The electronic device 600 typically includes multiple computer storage medium. Such medium may be any available medium that is accessible to the electronic device 600, including, but not limited to, volatile and non-volatile medium and removable and non-removable medium. The memory 620 may be volatile memory (for example, a register, cache, a random access memory (RAM)), a non-volatile memory (such as a read-only memory (ROM), an electrically erasable programmable read-only memory (EEPROM), a flash memory), or any combination thereof. The storage device 630 may be any removable or non-removable medium, and may include a machine-readable medium such as a flash drive, a disk, or any other medium, which may be used to store information and/or data and may be accessed within the electronic device 600.

The electronic device 600 may further include additional removable/non-removable, volatile/non-volatile storage medium. Although not shown in FIG. 6, a disk driver for reading from or writing to a removable, non-volatile disk (such as a "floppy disk"), and an optical disk driver for reading from or writing to a removable, non-volatile optical disk may be provided. In these cases, each driver may be connected to the bus (not shown) via one or more data medium interfaces. The memory 620 may include a computer program product 625 having one or more program modules that are configured to perform various methods or acts of the various embodiments of the present disclosure.

The communication unit 640 implements communication with other electronic devices through the communication medium. Additionally, the functions of the components of the electronic device 600 may be implemented by a single computing cluster or multiple computing machines, where the multiple computing machines may communicate through communication connections. Therefore, the electronic device 600 may use a logical connection with one or more other servers, a network personal computer (PC), or another network node to operate in a networked environment.

The input device 650 may be one or more input devices, such as a mouse, a keyboard, a tracking ball, etc. The output device 660 may be one or more output devices, such as a display, a speaker, a printer, etc. The electronic device 600 may further communicate with one or more external devices (not shown) such as a storage device and a display device, with one or more devices that enable the user to interact with the electronic device 600, or with any devices (such as a network card and a modem) that enable the electronic device 600 to communicate with one or more other electronic devices, through the communication unit 640, as needed. Such communication may be performed via input/output (I/O) interfaces (not shown).

According to an exemplary implementation of the present disclosure, there is provided a computer-readable storage medium having computer-executable instructions stored thereon, where the computer-executable instructions are executed by a processor to implement the method described above. According to an exemplary implementation of the present disclosure, there is further provided a computer program product tangibly stored on a non-transitory computer-readable medium and including computer-executable instructions, where the computer-executable instructions are executed by a processor to implement the method described above.

Various aspects of the present disclosure are described herein with reference to flowcharts and/or block diagrams of methods, apparatuses, devices, and computer program products implemented according to the present disclosure. It would be appreciated that each block of the flowcharts and/or block diagrams, and combinations of blocks in the flowcharts and/or block diagrams, may be implemented by computer-readable program instructions.

These computer-readable program instructions may be provided to a processing unit of a general-purpose computer, a special-purpose computer, or other programmable data processing apparatus to produce a machine, such that the instructions, when executed by the processing unit of the computer or other programmable data processing apparatus, produce an apparatus for implementing the functions/acts specified in one or more blocks of the flowcharts and/or block diagrams. These computer-readable program instructions may also be stored in a computer-readable storage medium, where these instructions cause the computer, the programmable data processing apparatus, and/or other devices to work in a specific manner, and thus, the computer-readable medium storing the instructions includes a manufactured product, which includes instructions for implementing various aspects of the functions/acts specified in one or more blocks of the flowcharts and/or block diagrams.

The computer-readable program instructions may be loaded onto a computer, another programmable data processing apparatus, or other devices to cause a series of operations and steps to be performed on the computer, the other programmable data processing apparatus, or the other devices to produce a computer-implemented process, such that the instructions executed on the computer, the other programmable data processing apparatus, or the other devices implement the functions/acts specified in one or more blocks of the flowcharts and/or block diagrams.

The flowcharts and block diagrams in the drawings show the possibly implemented architectures, functions, and operations of the systems, methods, and computer program products according to multiple implementations of the present disclosure. In this regard, each block in the flowchart or block diagram may represent a module, program segment, or part of an instruction, and the module, program segment, or part of an instruction contains one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagram and/or the flowchart, and a combination of blocks in the block diagram and/or the flowchart may be implemented by a special-purpose hardware-based system that execute specified functions or acts, or may be implemented by a combination of special-purpose hardware and computer instructions.

The implementations of the present disclosure have been described above, and the above description is exemplary, non-exhaustive, and not limited to the disclosed implementations. Many modifications and variations will be apparent to those of ordinary skill in the art without departing from the scope and spirit of the illustrated implementations. The terms used herein are chosen to best explain the principles of the implementations, the practical applications, or improvements to the technologies in the market, or to enable other those of ordinary skill in the art to understand the implementations disclosed herein.

## Claims

1. An interaction method, comprising:
applying a first style of a target effect to image content associated with a target user based on a selection of the target effect by the target user; and
switching the target effect from the first style to a second style, in response to interaction information associated with the target user satisfying a predetermined condition associated with the target effect.

2. The method of claim 1, wherein the image content comprises live streaming content of a live streaming room associated with the target user, the interaction information being determined based on at least one item of interaction data associated with the live streaming room.

3. The method of claim 1, wherein the image content is associated with a work published by the target user, the interaction information being determined based on at least one item of interaction data associated with the work.

4. The method of claim 1, wherein the target effect comprises at least one visual element superimposed on the image content, and switching the target effect from the first style to the second style comprises:
presenting a motion effect of the at least one visual element within a predetermined time period; or
changing display content of the at least one visual element.

5. The method of claim 1, wherein the target effect comprises a plurality of visual elements superimposed on the image content, and switching the target effect from the first style to the second style comprises:
adjusting visibility of at least one of the plurality of visual elements.

6. The method of claim 1, wherein the target effect is applied to a target object comprised in the image content.

7. The method of claim 1, further comprising:
sending first information indicating the predetermined condition to a remote device; and
determining that the predetermined condition is satisfied based on second information from the remote device, the second information being generated by the remote device based on the interaction information.

8. The method of claim 1, wherein the predetermined condition comprises at least one of the following:
an interaction value associated with the interaction information reaching a first threshold; and
a change degree associated with the interaction information reaching a second threshold.

9. The method of claim 1, further comprising:
presenting a set of candidate effects in an effect panel, the effect panel further displaying description information about a corresponding candidate effect, the description information indicating a style switch to be presented by the corresponding candidate effect when a specific condition is satisfied; and
receiving the selection of the target effect from the set of candidate effects by the target user.

10. An apparatus for user interaction, comprising:
an applying module configured to apply a first style of a target effect to image content associated with a target user based on a selection of the target effect by the target user; and
a switching module configured to switch the target effect from the first style to a second style, in response to interaction information associated with the target user satisfying a predetermined condition associated with the target effect.

11. An electronic device, comprising:
at least one processor; and
at least one memory, the at least one memory being coupled to the at least one processor and storing instructions for execution by the at least one processor, the instructions, when executed by the at least one processor, causing the electronic device to perform the method of any of claims 1 to 9.

12. A computer-readable storage medium having computer-executable instructions stored thereon, the computer-executable instructions being executable by a processor to implement the method of any of claims 1 to 9.

13. A computer program product comprising computer-executable instructions, the computer-executable instructions, when executed by a processor, implementing the method of any of claims 1 to 9.
